# EUROPEAN PATENT APPLICATION

(11) **EP 4 378 860 A1**
(43) Date of publication of application: **05.06.2024**
(21) Application number: 22210415.0
(22) Date of filing: 30.11.2022
(51) Int. Cl.: B65F 1/00, B65F 1/14, B65F 3/00, B60G 17/00

(54) **MOBILE STATION FOR THE TEMPORARY COLLECTION OF WASTE, AND RELATIVE INSTALLATION METHOD**

(71) Applicant: ID&A S.r.l., 25125 Brescia BS (IT); Compania Industrial de Remolques S.L., 08794 Les Cabanyes (Barcelona) (ES)
(72) Inventor: BRAGADINA, Giovanni, 25060 COLLEBEATO (BRESCIA) (IT); LLOPART VALL, Juan, 08794 CABANYES (BARCELONA) (ES)
(74) Representative: Tansini, Elio Fabrizio

(57) **Abstract**

A containment structure (2) defines an inner compartment (3) for housing containers (4). Delivery openings (12), each one arranged above one of the containers (4), allow to introduce waste. A lifting kinematic mechanism (14) connects the wheels (13) to the bottom wall (8) of the containment structure (2), to vertically move the containment structure (2) between a travel condition lifted from the ground (T), and a stationary condition wherein the support abutments (16) act on the ground (T) to support the containment structure (2). A drawbar (21) comprises an attachment portion (23) integral with the containment structure (2), to which a foldable portion (24) is engaged about an oscillation axis (K) parallel to said rotation axis (X) of the wheels (13), between an operating position wherein it protrudes horizontally from the containment structure (2), and a rest position wherein it is vertically approached to the front head wall (5).

## Description

The present invention relates to a mobile station for the temporary collection of waste. The invention also relates to a method for installing such a mobile station.

For the purposes of waste sorting, it is known to set up so-called collection centres, also referred to as "recycling areas" or "recycling depots", normally consisting of enclosed areas dedicated to the separate collection of waste in open containers.

Due to the significant environmental impact they cause, these collection centres must be built at a certain distance from built-up areas and away from parks or areas with a high landscape value. Therefore, collection centres are normally arranged in peripheral areas with a low landscape value and poorly populated, often in places that are difficult to be reached by users, resulting in a disincentive for their use by citizens. One of the major problems associated with the installation and management of waste collection facilities is indeed their strong environmental impact, as it is difficult to properly integrate them into the urban or landscape environment wherein the installation thereof is desired.

In the search for solutions aimed at limiting the environmental impact and ensuring an adequate collection capacity even within highly populated areas or with a high historical and/or landscape value, where urban decorum requires special attention, partially or totally underground collection systems have also been proposed, so as to be hidden from view during normal use, and then be brought to the street level to allow container emptying and/or replacement operations. However, even these solutions have had a limited recognition as they are expensive and complex to be constructed and managed.

Document IT1294176B1 proposes the use of mobile stations adapted to be temporarily installed in a designated area of the territory, to be then easily removed in order to transfer the collected waste to the treatment and/or disposal sites, and to be subsequently repositioned in the same area or in a new collection site. These temporary stations are normally obtained by using specially equipped roll-off containers, typically having a parallelepiped-shaped containment crate provided with at least one lifting hook attached to a front wall thereof. The lifting hook is adapted to be engaged by a lifting arm that is part of a loading equipment normally installed on an articulated truck, by means of which the container may be hoisted onto a loading platform of the vehicle itself, or unloaded from it to be laid on the ground.

The use of such stations within urban areas may, however, prove to be problematic, especially in historic sites or in the central districts of large cities or other historic sites, or in any case where the road traffic system hinders or makes it difficult for large trucks, which are necessarily required to transport the containers, to circulate.

It was also noted that the installation of these mobile stations may be required in areas normally intended for free pedestrian and vehicle traffic, so there is often a need, not fulfilled by the current state of the art, to use equipment that is less bulky and has less impact on aesthetics and landscape.

The object of the present invention is substantially to overcome the problems encountered in the prior art.

In particular, the object is to propose a relatively small-sized mobile station which may be easily transported even to places where the road traffic system is unsuitable for large trucks or lorries.

A further object of the invention is to propose a mobile station that may also be temporarily positioned in highly populated areas without compromising the safety of pedestrian and vehicle circulation.

The invention also intends to limit the environmental, urban and landscape impact typically associated with current installations of this type.

These objects and still others, which will appear more clearly in the following description, are substantially achieved by a mobile station for the temporary collection of waste, comprising a containment structure, defining an inner compartment for housing containers. Said inner compartment is preferably delimited by: head walls, front and rear respectively, mutually spaced apart along a direction of longitudinal development of the containment structure; side walls extending parallel to the direction of longitudinal development; at least one bottom wall and one top wall, mutually spaced and perimetrically circumscribed by said head walls and side walls. Delivery openings are arranged at least in said side and/or top walls, each one arranged above one of said containers, to allow the introduction of waste into the containers. Support abutments face downwards relative to the bottom wall. They are also provided: at least a pair of wheels coaxially aligned according to a rotation axis perpendicular to the direction of longitudinal development, and at least one lifting kinematic mechanism connecting the wheels to the bottom wall of the containment structure; wherein the lifting kinematic mechanism may be selectively activated to move the containment structure vertically relative to the wheels, between a travel condition wherein the support abutments are distant from the ground, and a stationary condition wherein the support abutments act against the ground to support the containment structure. The mobile unit also comprises a drawbar arranged at one of the head walls and bearing a coupling terminal that may be coupled to a motor vehicle hitch. The drawbar comprises an attachment portion integral with the containment structure, and a foldable portion rotatably engaged with the attachment portion about an oscillation axis parallel to said rotation axis. The foldable portion is movable between an operating position wherein it protrudes horizontally from the containment structure, and a rest position wherein it is vertically approached to the front head wall.

In a further aspect, the invention proposes a method for installing mobile stations for the temporary collection of waste, comprising: arranging at least a mobile station for the temporary collection of waste according to the present invention in a transport condition wherein the foldable portion of the drawbar is in an operating position and the containment structure is in a travel condition; hooking the drawbar coupling terminal to the hitch of a towing vehicle; transporting the temporary waste collection unit to a designated area of an urban territory; disengaging the coupling terminal from the hitch and moving the towing motor vehicle away; actuating the lifting kinematic mechanism to bring the containment structure into the stationary condition so that the crate is stabilised by the support abutments resting on the ground; switching the foldable portion of the drawbar from the operating position to the rest position.

In at least one convenient embodiment, the equipment may also have one or more of the hereinafter characteristics.

Preferably, switching members operating between the attachment portion and the foldable portion of the drawbar to move the foldable portion between the operating position and the rest position are also provided.

Preferably, the support abutments comprise a lower surface of the bottom wall.

Preferably, the support abutments are arranged substantially flush with respect to a lower surface of the bottom wall.

Preferably, the support abutments are distributed around the perimeter of the bottom wall.

Preferably, the support abutments protrude downwards relative to the bottom wall.

Preferably, at least in the stationary condition, the wheels protrude upwards relative to the bottom wall, through respective recesses arranged in the latter.

Preferably, shielding walls arranged within the inner compartment are also provided to delimit respective containment compartments housing at least one upper part of the wheels.

Preferably, at least one service chamber delimited between the containment compartments above the bottom wall, configured to house batteries and/or other ancillary equipment for the operation of the lifting kinematic mechanism or other mobile station equipment is further provided. Preferably, each one of the containment compartments is laterally delimited by a lower portion of one of the side walls.

Preferably, said lower portion is obtained in a central door arranged in a respective one of said side walls.

Preferably, the containment structure has one or more access doors to allow the introduction and removal of containers.

Preferably, said one or more access doors are arranged at least at one of the side walls.

Preferably, containment elements arranged within the inner compartment and delimiting respective containment areas circumscribing each container are further provided.

Preferably, the attachment portion of the drawbar is housed within the containment structure, and one of the head walls has at least one closeable cover element to accommodate and conceal the foldable portion in the rest position.

Further features and advantages will become apparent from the detailed description of a preferred but non-exclusive embodiment of a mobile station for the temporary collection of waste and a method for installing such a mobile station, according to the present invention. Such description will be set forth herein below with reference to the accompanying drawings, provided for merely indicative and therefore non-limiting purposes, wherein:
Figure 1 schematically shows in a side view a mobile station according to the present invention, in a travel condition;
Figure 2 schematically shows in a side and partial section view the mobile station of Figure 1, in a stationary condition;
Figure 3 is a schematic section view from above of the mobile station of Figures 1 and 2:
Figure 4 shows the station of the previous Figures in a front view;
Figure 5 schematically shows a lifting kinematic mechanism associated with the mobile station;
Figures 6 and 7 show an embodiment variant equipped with drawbar switching members in an operating position and a rest position respectively.

With reference to the above-mentioned figures, a mobile station for the temporary collection of waste according to the present invention is globally referred to as 1. The mobile station is adapted to be towed by a motor vehicle (not shown), e.g. a car, van, or light truck, to be transferred and temporarily deposited in a specific area where a waste collection point needs to be temporarily arranged.

The mobile station 1 comprises a containment structure 2 having for example a parallelepiped, prismatic, bell shape or other shape, preferably having a direction of longitudinal development L parallel to the travel direction imposed by the towing vehicle. In the containment structure 2 an inner compartment 3 is defined, normally closed with respect to the outer environment, not accessible to the public but only to authorised personnel, for housing at least one, preferably two or more containers 4 intended for waste sorting. Each container 4, preferably made in the form of a tank open on top, possibly provided with wheels to ease movement thereof, may be dedicated to the collection of a specific waste fraction, such as: glass, paper and cardboard, plastic, organic waste, undifferentiated waste, etc.

The inner compartment 3 is horizontally delimited between two head walls, front 5 and rear 6 respectively, which are mutually spaced along the direction of longitudinal development L of the containment structure 2, and two side walls 7 extending parallel to the direction of longitudinal development L, along the entire length of the containment structure 2. The inner compartment 3 is also vertically delimited between a bottom wall 8 and a top wall 9 that are mutually spaced and perimetrically circumscribed by head walls 5, 6 and side walls 7.

One or more access doors 10 are preferably arranged in the containment structure 2 to allow the introduction and removal of the containers 4. In the example shown, several access doors 10 are provided, one for each container 4, preferably at one or both side walls 7. For this purpose, at least the side walls 7 may comprise upright profiles 7a, to which the access doors 10, each one made in panel form, are hinged. Each access door 10 preferably has an S-lock that may only be opened by authorised personnel.

Containment elements 11, e.g. in the form of bars, partitions and/or standoffs circumscribing each container 4 at short distances, may be installed in the inner compartment 3 to delimit the respective containment areas 3a, in order to stabilise the positioning of the containers 4 against accelerations and/or jolts transmitted during travel. In the upper part of the side walls 7, preferably at each access doors 10, delivery openings 12 are arranged, each of which is above one of the containers 4, to allow the introduction of waste from outside. In addition or alternatively, the delivery openings 12 may be obtained in the top wall 9 and/or in the head walls 5, 6. In a possible embodiment not shown, the delivery openings 12 may be accessed via respective access hatches or other enabling/access control devices 12a. Such devices 12a, which are not described in detail as they may be made in a known manner, may be opened by means of electro-locks or equivalent systems, which may be activated by a control unit following the identification of an authorised user, recognisable through a special interface 12b e.g. by means of an identification code entered by means of a keyboard or touchscreen, or stored on a special badge or on a personal smartphone, to enable the waste delivery operation and/or to proceed to the registration of the types and/or quantities of waste delivered.

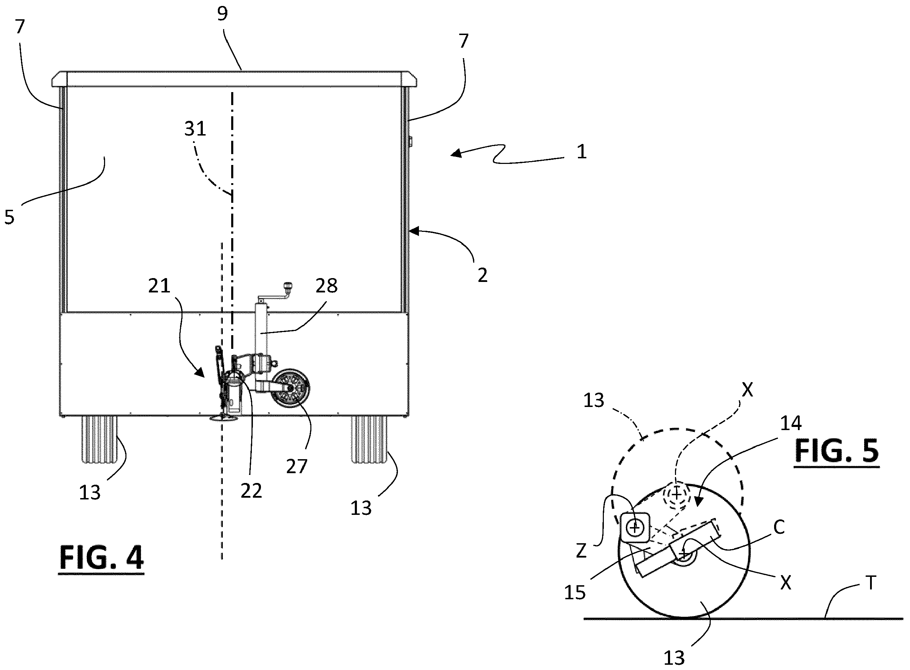

At least a pair of wheels 13 coaxially aligned according to a rotation axis X perpendicular to the direction of longitudinal development L is interconnected to the bottom wall 8, and is possibly fixed by a frame not shown. The wheels 13, rotatably idle, are connected to the bottom wall 8, possibly at the aforesaid frame by at least one lifting kinematic mechanism 14 selectively activated to vertically move the containment structure 2 with respect to the wheels 13. Such kinematic mechanism, schematically exemplified in Figure 5, is not described in detail as it may be made in compliance with one or more commercially available variable-height kinematic mechanisms, e.g. for use on caravans or other types of trailers. For example, it may envisage that the wheels 13 are carried by respective arms 15 rotatably constrained to the containment structure 2 about a common hinge axis Z, for example at the ends of a crossbeam that is integral with the bottom wall 8, and simultaneously movable upon the action of one or more linear actuators C about its own hinge axis Z to cause the lifting and lowering of the containment structure 2 with respect to the ground T, i.e. the road surface on which the wheels 13 lie.

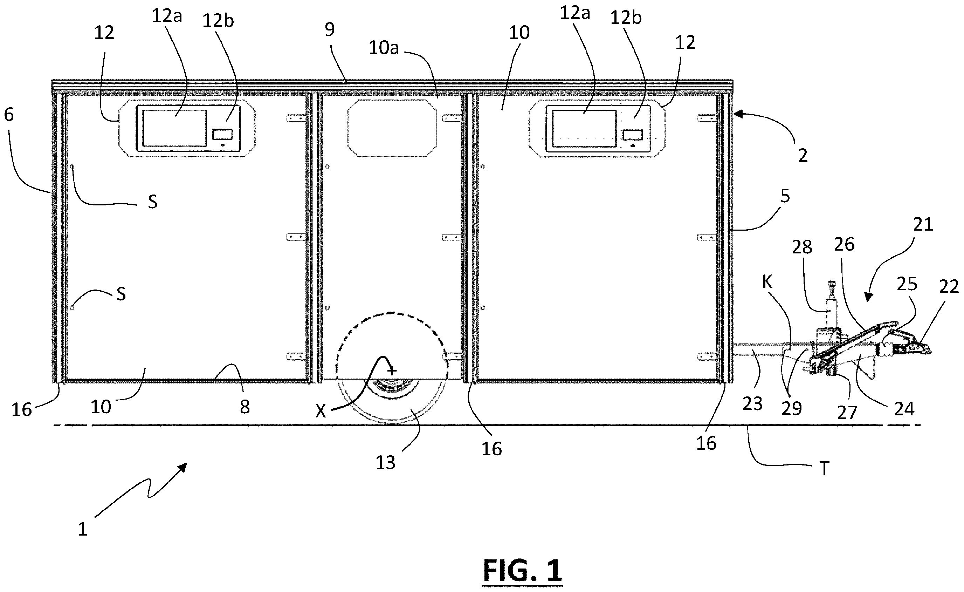

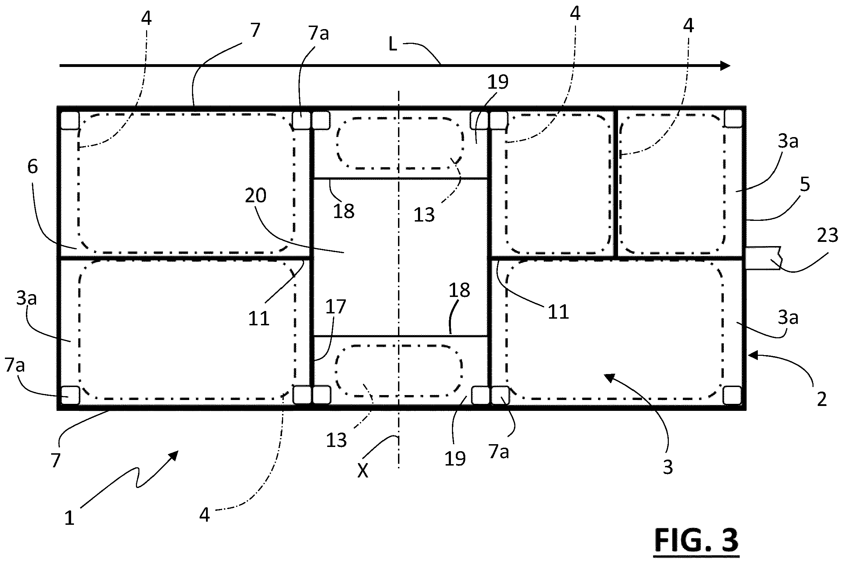

The containment structure 2 has support abutments 16, facing downwards from the bottom wall 8. Upon the action of the lifting kinematic mechanism 14, the containment structure 2 is adapted to be moved vertically between a travel condition wherein, as shown in Figures 1 and 4, the support abutments 16 are adequately spaced from the ground T to allow the travel of the towed mobile station 1, and a stationary condition wherein, as shown in Figure 3, the support abutments 16 act against the ground T to support the containment structure 2 while the wheels 13 may remain in contact with the ground T or slightly distant from it. The support abutments 16 may be conveniently distributed around the perimeter and protrude downwards relative to the bottom wall 8. In the preferred embodiment shown, the support abutments 16 are arranged substantially flush with the lower surface of the bottom wall 8, projecting downward from it to an extent not exceeding 5-10 mm. The bottom wall 8 is thereby advantageously arranged substantially flush with the ground T in the stationary condition, facilitating the introduction and removal of containers 4 from the inner compartment 3 through the access doors 10. In a possible embodiment variant, the support abutments may be made by means of adjustable support feet, e.g. by screwing through the bottom wall 8.

It is preferably envisaged that at least in the stationary condition the wheels 13 protrude upwards relative to the bottom wall 8, through respective recesses 17 arranged in the latter. In the inner compartment 3, shielding walls 18 may be arranged delimiting the respective containment compartments 19 of the wheels 13, or at least of the upper part thereof. Between the containment compartments 19, a service chamber 20 adapted to house batteries and other ancillary equipment for the operation of the lifting kinematic mechanism 14 or other equipment of the mobile station 1 may be conveniently delimited above the bottom wall 8. The containment compartments 19 may each be laterally delimited by a lower portion of one of the side walls 7. Such lower portions may be carried by respective central access doors 10a arranged in the side walls 7 to ease the access to the inner compartment 3 and the service chamber 20. When the central access doors 10a are closed, the lower portions of the side walls 7 conceal the wheels 13, or at least the upper part thereof, from view.

At one of the head walls, i.e. the front head wall 5, a drawbar 21 carrying a coupling terminal 22 that may be coupled to a hitch of a motor vehicle is arranged.

The drawbar 21 comprises an attachment portion 23 integral with the containment structure 2, fixed near the bottom wall 8. The attachment portion 23 is rotatably engaged to a foldable portion 24, about an oscillation axis K parallel to the rotation axis X of the wheels 13.

An inertial control unit 25 may be installed on the foldable portion 24, which, as known, is in charge of actuating a wheel braking system 13 in response to decelerations of the towing vehicle. The braking system, which is not described as it is known and not relevant for the purposes of the invention, may also be activated by means of a manual control lever 26 installed on the foldable portion 24 of the drawbar 21, in order to lock the wheels 13 when necessary when the mobile station 1 is unhooked from the towing vehicle.

The drawbar 21 may also be equipped with a pivoting support wheel 27, possibly mounted on a height adjustment device 28. The support wheel 27 is preferably installed at the foldable portion 24, and may be motorised if necessary to ease short movements of the mobile station 1 disengaged from the towing vehicle.

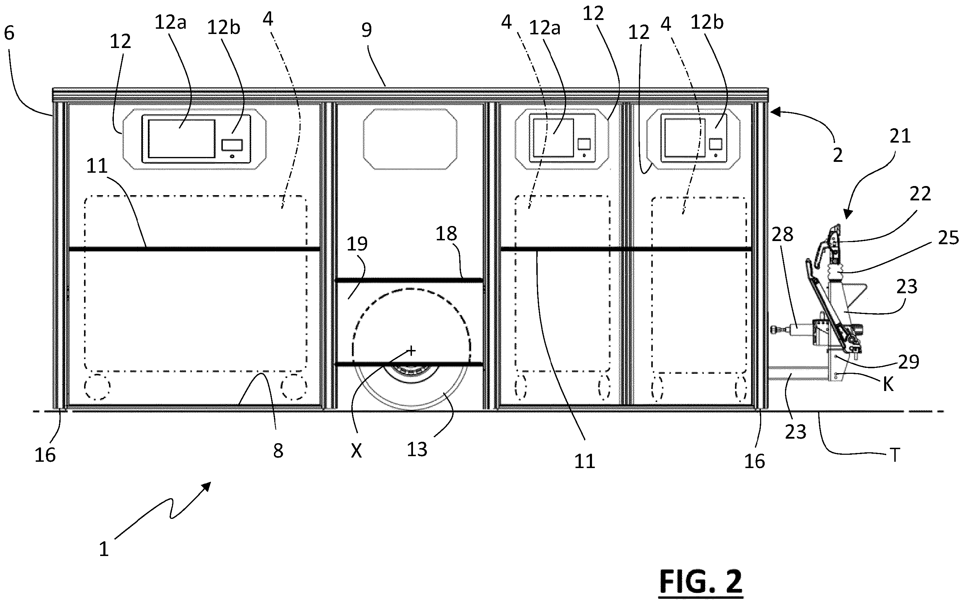

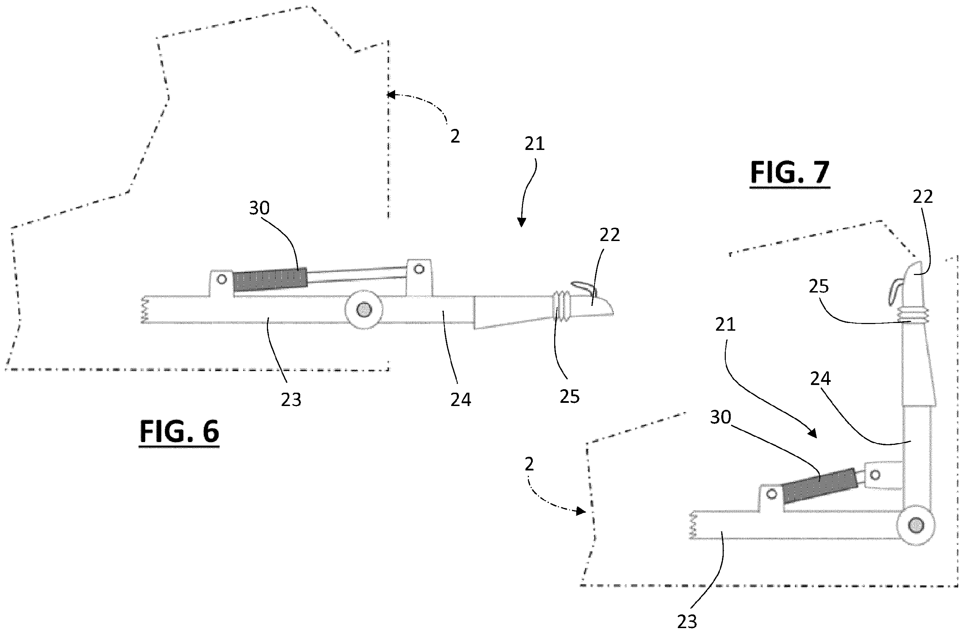

By means of angular rotations around its oscillation axis K, the foldable portion 24 is adapted to be switched between an operating position wherein, as better visible in Figures 1 and 6, it protrudes horizontally from the front head wall 5 of the containment structure 2, and a rest position wherein, as shown in Figures 2 and 7, it is vertically approached to the front head wall. In this regard, in the embodiment shown in Figures 1 to 4, the foldable portion 24 may be rigidly engaged to the attachment portion 23 by means of one or more bolts 29 or reversible fasteners of another type, which are adapted to be removed or deactivated to allow manually performing the angular rotation of the foldable portion 24.

In a possible variant shown in the Figures 6 and 7, the angular rotation of the foldable portion 24 may instead also be performed automatically, upon the action of switching members 30 comprising, for example, a fluid-dynamic cylinder or other actuator operating between the attachment portion 23 and the foldable portion 24.

In accordance with an installation method according to the present invention, the mobile station 1 is adapted to be arranged in a transport condition wherein the foldable portion 24 of the drawbar 21 is in an operating position and the containment structure 2 is in a travel condition, as shown in Figures 1 and 4 to be engaged by means of the coupling terminal 22 to the hitch of the motor vehicle. In this condition, the mobile station 1 is adapted to be easily transported to a designated area of an urban territory, even to places where the road traffic circulation is difficult or precluded to heavy vehicles. The use of the drawbar 21 allows the mobile station 1 to be towed by even a small car. Once the designated area has been reached, the drawbar 21 may be unhooked from the motor vehicle to allow the latter to move away and, after lowering the pivoting support wheel 27, the mobile station 1 may possibly be moved manually and/or with the aid of the motorisation associated with the same support wheel 27, for a more precise positioning.

Once the positioning has been completed, after possibly lifting the support wheel 27, the lifting kinematic mechanism 14 may be actuated to bring the mobile station 1 into the stationary condition, so as to determine the stabilisation of the containment structure 2 following the contact of the support abutments 16 on the ground T. The foldable portion 24 of the drawbar 21 is in turn adapted to be brought manually or by means of the switching members 30 into the respective rest position, laterally approached to the front head wall 5, so as not to hinder vehicle and pedestrian traffic circulation near the mobile station 1, facilitating safe access by the users.

In a possible embodiment, it may be envisaged that the attachment portion 23 of the drawbar 21 is enclosed within the containment structure 2. The front head wall 5 may be provided with at least one closable cover element 31, e.g. in the form of a shutter or flap, to accommodate and conceal the foldable portion 24 in the rest position, as indicatively depicted in hatching in Figure 4, possibly within a compartment suitably delimited with respect to the inner compartment 3.

The entire drawbar 21 may therefore be concealed from view and adequately protected from accidental impact and/or tampering when the mobile station 1 is in the stationary condition, to the benefit of safety and urban decorum.

## Claims

1. Mobile station for the temporary collection of waste, comprising:
a containment structure (2), defining an inner compartment (3) for housing containers (4), said inner compartment (3) being delimited by:
head walls (5, 6), front (5) and rear (6) respectively, mutually spaced apart along a direction of longitudinal development (L) of the containment structure (2);
side walls (7) extending parallel to the direction of longitudinal development (L);
at least one bottom wall (8) and one top wall (9), mutually spaced apart and perimetrically circumscribed by said head walls (5, 6) and side walls (7);
delivery openings (12) arranged at least in said side (7) and/or top walls, each one arranged above one of said containers (4), to allow the introduction of waste into the containers (4);
support abutments (16) facing downwards relative to the bottom wall (8);
at least a pair of wheels (13) coaxially aligned according to a rotation axis (X) perpendicular to the direction of longitudinal development (L);
at least one lifting kinematic mechanism (14) connecting the wheels (13) to the bottom wall (8) of the containment structure (2);
wherein the lifting kinematic mechanism (14) may be selectively activated to vertically move the containment structure (2) relative to the wheels (13), between a travel condition wherein the support abutments (16) are distant from the ground (T), and a stationary condition wherein the support abutments (16) act against the ground (T) to support the containment structure (2);
a drawbar (21) arranged at one of the head walls (5, 6) and bearing a coupling terminal (22) that may be coupled to a motor vehicle hitch:
wherein the drawbar (21) comprises an attachment portion (23) integral to the containment structure (2), and a foldable portion (24) rotatably engaged to the attachment portion (23) about an oscillation axis (K) parallel to said rotation axis (X);
wherein the foldable portion is movable between an operating position wherein it protrudes horizontally from the containment structure (2), and a rest position wherein it is vertically approached to the front head wall (5).

2. Mobile station according to claim 1, further comprising switching members (30) operating between the attachment portion (23) and the foldable portion (24) of the drawbar (21), for moving the foldable portion (24) between the operating position and the rest position.

3. Mobile station according to claim 1 or 2, wherein the support abutments (16) are arranged substantially flush with respect to a lower surface of the bottom wall (8).

4. Mobile station according to one or more of the preceding claims, wherein the support abutments (16) are distributed around the perimeter of the bottom wall (8).

5. Mobile station according to one or more of the preceding claims, wherein the support abutments (16) protrude downward from the bottom wall (8).

6. Mobile station according to one or more of the preceding claims, wherein at least in the stationary condition the wheels (13) protrude upwards relative to the bottom wall (8), through respective recesses (17) arranged in the latter.

7. Mobile station according to claim 6, further comprising shielding walls (18) arranged within the inner compartment (3) to delimit respective containment compartments (19) housing at least an upper part of the wheels (13).

8. Mobile station according to claim 7, further comprising at least one service chamber (20) delimited between the containment compartments (19) above the bottom wall (8), configured to house batteries and/or other ancillary apparatuses for operating the lifting kinematic mechanism (14) or other equipment of the mobile station (1).

9. Mobile station according to claim 7 or 8, wherein each of the containment compartments (19) is laterally delimited by a lower portion of one of the side walls (7).

10. Mobile station according to claim 9, wherein said lower portion is formed in a central door (10a) arranged in a respective one of said side walls (7).

11. Mobile station according to one or more of the preceding claims, wherein the containment structure (2) has one or more access doors (10) to allow introducing and removing containers (4).

12. Mobile station according to claim 11, wherein said one or more access doors (10) are arranged at least at one of the side walls (7).

13. Mobile station according to one or more of the preceding claims, further comprising containment elements (11) arranged within the inner compartment (3) and delimiting respective containment areas (3a) circumscribing each container (4).

14. Mobile station according to one or more of the preceding claims, wherein the attachment portion (23) of the drawbar (21) is housed within the containment structure (2), and one of the head walls (5) has at least one closeable cover element (31), to accommodate and conceal in the containment structure the foldable portion (24) in the rest position.

15. Method for installing mobile stations for the temporary collection of waste, comprising:
arranging at least one mobile station (1) for the temporary collection of waste according to one or more of the preceding claims in a transport condition wherein the foldable portion (24) of the drawbar (21) is in an operating position and the containment structure (2) is in a travel condition;
hooking the coupling terminal (22) of the drawbar (21) to the hitch of a towing motor vehicle;
transporting the unit for the temporary collection of waste to a designated area of an urban territory;
disengaging the coupling terminal (22) from the hitch and moving the towing motor vehicle away;
actuating the lifting kinematic mechanism (14) to bring the containment structure (2) into the stationary condition in order to stabilise the crate with the support abutments (16) resting on the ground;
switching the foldable portion (24) of the drawbar from the operating position to the rest position.
